(19) **Europäisches Patentamt / European Patent Office / Office européen des brevets**

(11) **EP 1 767 761 B1**

(12) **EUROPÄISCHE PATENTSCHRIFT**

(45) Veröffentlichungstag und Bekanntmachung des Hinweises auf die Patenterteilung:
**28.11.2007 Patentblatt 2007/48**

(51) Int Cl.:
*F02D 41/02* (2006.01)    *F02D 41/30* (2006.01)
*F02D 41/38* (2006.01)    *F01N 3/08* (2006.01)

(21) Anmeldenummer: **06120210.7**

(22) Anmeldetag: **06.09.2006**

(54) **Verfahren zur Regeneration eines NOx-Speicherkatalysators**

Method for regenerating a NOx storage catalyst

Procédé pour régénérer un catalyseur accumulateur de NOx

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.09.2005 DE 102005045858**

(43) Veröffentlichungstag der Anmeldung:
**28.03.2007 Patentblatt 2007/13**

(73) Patentinhaber: **Siemens VDO Automotive AG 93055 Regensburg (DE)**

(72) Erfinder:
• **Achleitner, Erwin
93083, Obertraubling (DE)**
• **Rösel, Gerd
93055, Regensburg (DE)**

(56) Entgegenhaltungen:
DE-A1- 10 237 949    JP-A- 11 336 618
JP-A- 2000 282 915    JP-A- 2000 282 916
JP-A- 2000 337 198    JP-A- 2001 032 741
JP-A- 2002 130 007    JP-A- 2003 301 736
US-A1- 2002 129 598

EP 1 767 761 B1

**Beschreibung**

Die vorliegende Erfindung betrifft ein Verfahren zur Regeneration eines NOx-Speicherkatalysators gemäß dem Oberbegriff des Patentanspruchs 1.

Zur weiteren Reduzierung des Kraftstoffverbrauchs von nach dem Ottomotor-Prinzip arbeitenden Brennkraftmaschinen werden diese Brennkraftmaschinen mit einem mageren Gemisch betrieben. Bei einer solchen mageren Betriebsweise wird zwischen zwei grundlegenden Betriebsarten unterschieden.

In einem unteren Lastbereich wird die Brennkraftmaschine mit einer stark geschichteten Zylinderbeladung und hohem Luftüberschuss betrieben (als geschichtet-magerer Betrieb bezeichnet), d.h. das Gemisch wird um die zentral im Brennraum positionierte Zündkerze konzentriert, in den Randbereichen des Brennraums befindet sich reine Luft. Dies wird u.a. durch eine späte Einspritzung in den Verdichtungshub kurz vor dem Zündzeitpunkt erreicht. Die Brennkraftmaschine wird dabei unter Vermeidung von Drosselverlusten weitgehend bei geöffneter Drosselklappe betrieben.

In einem oberen Lastbereich wird die Brennkraftmaschine mager und mit homogener Zylinderladung betrieben (als homogen-magerer Betrieb bezeichnet). Die Einspritzung erfolgt bereits während des Ansaugtaktes, um eine gute Durchmischung von Kraftstoff und Luft zu erhalten. Die angesaugte Luftmasse wird entsprechend dem angeforderten Drehmoment, was z.B. von einem Fahrer über ein Gaspedal abgefordert wird, über eine Drosselklappe eingestellt.

Schließlich kann die Brennkraftmaschine auch mit einem stöchiometrischen Kraftstoff-Luft-Gemisch betrieben werden (als stöchiometrischer Betrieb bezeichnet). Dabei wird auf bekannte Weise die benötigte Kraftstoffmenge aus der angesaugten Verbrennungsluftmasse unter Berücksichtigung der Drehzahl berechnet und gegebenenfalls über eine Lambda-Regelung korrigiert.

Während des Magerbetriebs entstehen jedoch für den Menschen und die Natur schädliche Stickoxide (NOx-Verbindungen, d.h. NO Stickstoffmonoxid, $N_2O$ Distickstoffoxid, und $NO_2$ Stickstoffdioxid), die aus dem Abgas entfernt werden müssen. Dies geschieht mittels eines im Abgastrakt der Brennkraftmaschine angeordneten NOx-Speicherkatalysators. Ein solcher NOx-Speicherkatalysator ist aus Metallträgern aufgebaut, welche eine Beschichtung aus Alkali- und Erdalkalimetallen aufweisen, welche die Stickoxide aus dem Abgasstrom aufnimmt. Der NOx-Speicherkatalysator weist jedoch nur eine begrenzte Speicherfähigkeit für Stickoxide und auch im Kraftstoff enthaltenen Schwefel auf, so dass der Katalysator gereinigt, d.h. regeneriert werden muss, da sonst die Stickoxide ungehindert an die Luft gelangen. Eine solche Regeneration muss regelmäßig durchgeführt werden, wobei die gespeicherten NOx-Verbindungen im NOx-Speicherkatalysator in unschädliche Verbindungen umgewandelt werden, wenn ein Reduktionsmittel zugegeben wird. Als Reduktionsmittel können Kohlenmonoxid, Wasserstoff und Kohlenwasserstoff verwendet werden.

Es hat sich als zweckmäßig herausgestellt, diese Reduktionsmittel durch kurzzeitigen Betrieb der Brennkraftmaschine mit einem fetten Kraftstoff/Luft-Gemisch zu erzeugen, wodurch der NOx-Speicherkatalysator das notwendige Reduktionsmittel als Bestandteil des ihm ohnehin zugeführten Abgases erhält und gespeicherte NOx-Verbindungen abbaut, so dass der NOx-Speicherkatalysator wieder zur erneuten Einspeicherung von NOx-Verbindungen in der Lage ist. Dieser kurzzeitige Betrieb der Brennkraftmaschine stellt die erwähnte Regenerationsbetriebsphase dar.

Jedoch erhöht dieser kurzzeitige Betrieb der Brennkraftmaschine den Kraftstoffverbrauch.

Um diesem erhöhten Kraftstoffverbrauch entgegenzuwirken, schlägt ein herkömmliches Regenerationsverfahren vor, welches zum Beispiel aus der DE 198 44 082 C1 bekannt ist, die Regenerationsmittelmenge in Abhängigkeit vom Sauerstoffgehalt im Abgas zu variieren.

Der Sauerstoffgehalt im Abgas wird zum Beispiel mit einer Lambda-Sonde gemessen. Die Lambda-Sonde misst ständig den Sauerstoffanteil im Abgas, der nach der Verbrennung überbleibt. Die Lambda-Sonde ermittelt die Abgaskonzentration durch eine vergleichende Sauerstoffmessung, wobei der Sauerstoffgehalt der Außenluft (ca. 20,8%) mit dem Restsauerstoff im Abgas verglichen wird. Der Sauerstoff der Außenluft bildet somit den Referenzwert, der konstant bleibt. Befindet sich zum Beispiel ein Restsauerstoffgehalt von 2% (mager) im Abgas, so entsteht aufgrund der Differenz ein Spannungssignal von ca. 0,1 V. Sind weniger als 2% Restsauerstoff vorhanden (fett) so macht sich das durch eine erhöhte Differenz zum Außenluftsauerstoff und einer Sondenspannung von ca. 0,9 V bemerkbar. Diese Unterschiede werden über ein Spannungssignal an ein Steuergerät weitergegeben.

Das Steuergerät korrigiert dann Zündung und Einspritzung entsprechend.

Es wird also in Abhängigkeit vom Sauerstoffgehalt eine Umschaltung von Mager- auf Fettbetrieb durchgeführt, womit die Genauigkeit der Dosierung der Regenerationsmittel erhöht wird.

Als Nachteil des Standes der Technik wird jedoch empfunden, dass eine Speicherkapazitätsabnahme aufgrund von hohen Schwefelkonzentrationen im Kraftstoff nicht berücksichtigt wird, so dass ein Schichtbetrieb nicht notwendigerweise unterbunden wird, wobei eine unzulässige Emission von Stickoxiden entsteht.

Der vorliegenden Erfindung liegt deshalb die Aufgabe zugrunde, ein verbessertes Verfahren zur Regeneration eines NOx-Speicherkatalysators anzugeben.

Diese Aufgabe wird durch die Merkmale des Patentanspruchs 1 gelöst. Vorteilhafte Ausgestaltungen der Erfindung sind in den Unteransprüchen angegeben.

Die Vorteile des erfindungsgemäßen Verfahrens liegen darin, dass auch eine durch den Schwefelgehalt im

EP 1 767 761 B1

Kraftstoff hervorgerufene Speicherkapazitätsabnahme des NOx-Speicherkaalyators anhand einer Änderungsgeschwindigkeit der verfügbaren NOx-Speicherkapazität berücksichtigt wird. Dabei wird ein Gradient der Abnahme der NOx-Speicherkapazität erfasst, wobei der Schichtbetrieb der Brennkraftmaschine dann unterbunden wird, wenn der Gradient einen vorbestimmten Wert übersteigt.

Vorteilhafterweise kann bei Unterbindung des Schichtbetriebs der Brennkraftmaschine diese dann in einem stöchiometrischen Betrieb betrieben werden, so dass die durch Regeneration entstehenden zusätzlichen Kraftstoffverbräuche vermieden werden.

Es ergibt sich außerdem der Vorteil, dass das Katalysatorsystem eine verringerte thermische Belastung infolge der sonst durch die Regenerationen auftretenden hohen Katalysatortemperaturen erfährt.

Des Weiteren ergibt sich der Vorteil, dass ein Schwefelausstoß in Form von $SO_2$ bzw. $H_2S$ während einer Regeneration reduziert werden kann.

Außerdem ergibt sich der Vorteil, dass aufgrund der Unterbindung der Schwefelregeneration, die das Fahrverhalten beeinflusst, eine Komforterhöhung eintritt, da nämlich eine starke Zündwinkelbeeinflussung ein Aufheizen der Brennkraftmaschine zur Folge hat.

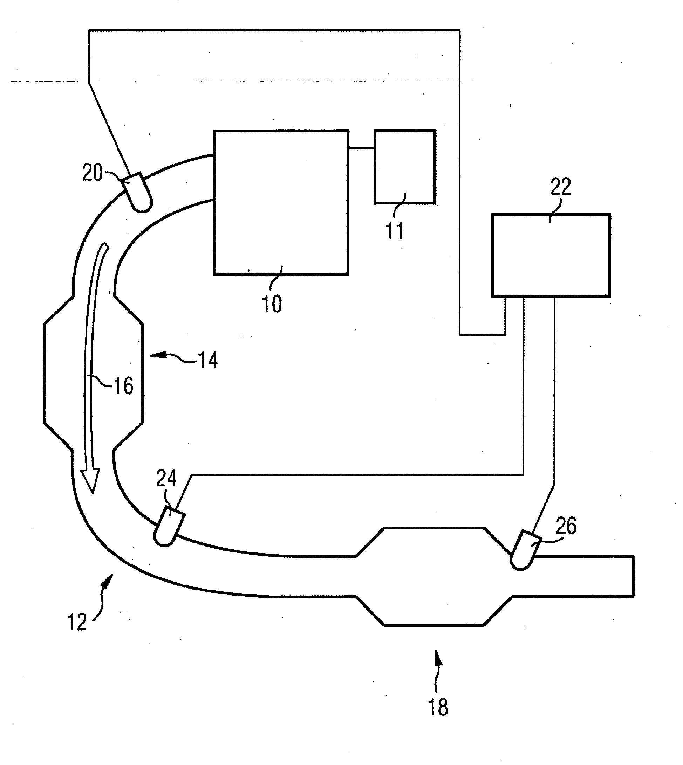

Die Erfindung wird nachfolgend unter Bezugnahme auf die Zeichnung näher erläutert:

Dabei zeigt die einzige Figur eine schematische Darstellung einer Brennkraftmaschine mit einem NOx-Speicherkatalysator.

In der Figur ist in Form einer schematischen Zeichnung eine Brennkraftmaschine mit einer Abgasnachbehandlungsanlage gezeigt, bei der das erfindungsgemäße Verfahren angewendet wird. Dabei sind nur die Teile und Komponenten dargestellt, die zum Verständnis der Erfindung nötig sind.

Eine mit einem Kraftstofffluidvorrat 11 in Verbindung stehende Brennkraftmaschine 10 weist einen Abgastrakt 12 auf. In diesem Abgastrakt 12 ist eine Abgasnachbehandlungsanlage für mageres Abgas vorgesehen. Sie besteht aus einem motornahen 3-Wege-Katalysator 14, welcher auch als Vorkatalysator bezeichnet wird, und einem in Strömungsrichtung (Pfeil 16) des Abgases nachgeschalteten NOx-Speicherkatalysator 18. Die Beschichtung des NOx-Speicherkatalysators ist dermaßen ausgelegt, daß durch Edelmetallbestandteile die 3-Wege-Funktion für den stöchiometrischen Betriebsbereich mit integriert ist.

Ein Sauerstoffmeßaufnehmer 20, welcher im dargestellten Beispiel eine Lambda-Sonde ist, die in Abhängigkeit des Sauerstoffgehalts im Abgas ein stetiges, zum Beispiel lineares Ausgangssignal abgibt. Mit dem Signal dieser Lambda-Sonde 20 wird die Luftzahl während des Magerbetriebes und während der Regenerationsphase mit fettem Gemisch entsprechend Schwellenwerten gesteuert. Diese Funktion wird von einer Motorsteuerung 22 übernommen.

Es ist ein Temperatur-Sensor 24 vorgesehen, der die Temperatur des Abgases an die Motorsteuerung 22 übermittelt.

Weiterhin ist ein NOx-Sensor 26 vorgesehen, der zum einen den Lambda-Wert und zum anderen den Stickoxid-Anteil im Abgas erfasst.

Mithilfe des NOx-Sensors 26 wird nun eine hohe Schwefelkonzentration im Kraftstoff erfasst und bei dem Betrieb der Brennkraftmaschine berücksichtigt. Zur Erfassung einer zu hohen Schwefelkonzentration werden mehrere Stickoxid-Anteil-Werte und daraus ein Gradient der Abnahme der NOx-Speicherkapazität ermittelt. In einem Speicher der Motorsteuerung 22 ist ein Schwellenwert für den Gradienten definiert, der eine Beschränkung darstellt, bis zu der die Brennkraftmaschine im Schichtbetrieb betrieben werden soll. Bei einer Überschreitung des Schwellenwertes wird der geschichtete Betrieb unterbunden, und die Brennkraftmaschine wird dann in einem stöchiometrischen Betrieb gefahren.

Dabei gibt es zum einen die Möglichkeit, die Unterbindung des Schichtbetriebs für die Dauer eines momentanen Betriebs der Brennkraftmaschine aufrechtzuerhalten, d.h. bis die Brennkraftmaschine nicht mehr in Betrieb ist, d.h. also für einen Fahrzyklus.

Bei einer erneuten Inbetriebnahme der Brennkraftmaschine wird dann eine erneute Erfassung des zeitlichen Gradienten der Abnahme der NOx-Speicherkapazität durchgeführt, wobei auf der Grundlage dieser erneuten Erfassung eine Entscheidung getroffen wird, ob die Brennkraftmaschine im Schichtbetrieb oder im stöchiometrischen Betrieb betrieben werden soll.

Zum anderen gibt es die Möglichkeit, die Unterbindung des Schichtbetriebs der Brennkraftmaschine solange aufrechtzuerhalten, bis eine Menge an Kraftstofffluid in dem Kraftstofffluidvorrat 11 von der Brennkraftmaschine verbraucht ist, wobei eine erneute Erfassung des Gradienten der Abnahme der NOx-Speicherkapazität dann durchgeführt werden kann, wenn eine erneute Menge an Kraftstofffluid vorhanden ist und eine Schwefelregeneration durchgeführt wurde.

Anhand folgender Beispielrechnung soll die Bedeutung der Erkennung einer zu hohen Schwefelkonzentration im Kraftstoff verdeutlicht werden:

Grundlage sind sogenannte MVEG (motor vehicle emissions group) -Fahrbedingungen, d.h. 1 Gramm Schwefel ist reversibel im Katalysator speicherbar.

Bei einem Standard-Kraftstoff für mager-betriebene OttoMotoren, wobei der Standard-Kraftstoff eine Schwefelkonzentration von 8 ppm aufweist, beträgt die Laufleistung zwischen zwei Schwefelregenerationen 4000 km.

Bei einem stark verschwefelten Kraftstoff, d.h. nichtspezifizierten Kraftstoff, der eine Schwefelkonzentration von 1000 ppm aufweist, beträgt die Laufleistung zwischen zwei Schwefelregenerationen 32 km. Gegenüber dem stöchiometrischen Fahrbetrieb beträgt die Kraftstoff-Verbrauchseinsparung bei magerem Betrieb im Mittel 7,5 % (da die Kraftstoffersparnis gegenüber dem stöchiometrischen Betrieb zwischen zwei Schwefelregenerationen linear von 15 % auf 0 % absinkt), und es ist eine Fahrtstrecke von 30 km für die Schwefelregeneration mit einem Verbrauchsnachteil von -15 % gegenüber dem stöchiometrischen Betrieb erforderlich.

Somit ergibt sich bei einer Schwefelkonzentration von 8 ppm im Kraftstoff folgender Verbrauchsvorteil:

$$(4000 \text{ km} * 7,5 \% - 30 \text{ km} * 15 \%) / 4030 \text{ km} = 7,3 \%.$$

Bei einer Schwefelkonzentration von 1000 ppm im Kraftstoff ergibt sich bei einem Betrieb der Brennkraftmaschine ohne das erfindungsgemäße Verfahren folgender Verbrauchsnachteil:

$$(32 \text{ km} * 7,5 \% - 30 \text{ km} * 15 \%) / 64 \text{ km} = -3,4 \%.$$

Zusammenfassend lassen sich die folgenden Vorteile des erfindungsgemäßen Verfahrens feststellen:

Der Betrieb eines NOx-Speicherkatalysators gemäß des vorgeschlagenen Verfahrens führt zu einer erhöhten Effektivität, da der durch den Betrieb mit Kraftstoffen mit hoher Schwefelkonzentration hervorgerufene Kraftstoffmehrverbrauch (zum Beispiel -3,4 %) unterbunden werden kann und ein zum stöchiometrischen Betrieb vergleichbarer Kraftstoffverbrauch erzielt wird.

**Patentansprüche**

1. Verfahren zur Regeneration eines NOx-Speicherkatalysators (18),

   - wobei der NOx-Speicherkatalysator (18) in einem Abgastrakt (12) einer Brennkraftmaschine (10) angeordnet ist,
   - wobei die Brennkraftmaschine (10) zum Betreiben derselben mit einem Kraftstofffluidvorrat (11) in Verbindung steht,
   - wobei der NOx-Speicherkatalysator (18) mit einer Speicherkapazität zur Speicherung von von der Brennkraftmaschine (10) emittierten NOx-Verbindungen ausgebildet ist, und
   - wobei der NOx-Speicherkatalysator (18) Nox-Verbindungen während einer Speicherphase adsorbiert, wenn die Brennkraftmaschine (10) in einem Schichtbetrieb betrieben wird,

   **dadurch gekennzeichnet, dass**
   ein Gradient der Abnahme der NOx-Speicherkapazität erfasst wird, wobei der Schichtbetrieb der Brennkraftmaschine (10) dann unterbunden wird, wenn der Gradient einen vorbestimmten Schwellenwert übersteigt.

2. Verfahren nach Anspruch 1, wobei die Brennkraftmaschine (10) bei Unterbindung des Schichtbetriebs der Brennkraftmaschine (10) in einem stöchiometrischen Betrieb betrieben wird.

3. Verfahren nach Anspruch 1 oder 2, wobei die Unterbindung des Schichtbetriebs der Brennkraftmaschine (10) für die Dauer eines momentanen Betriebs der Brennkraftmaschine (10) aufrechterhalten wird, bis die Brennkraftmaschine (10) nicht mehr in Betrieb ist.

4. Verfahren nach Anspruch 3, wobei bei erneutem Betrieb der Brennkraftmaschine (10) eine erneute Erfassung des Gradienten der Abnahme der NOx-Speicherkapazität durchgeführt wird, wobei auf der Grundlage dieser erneuten Erfassung eine Entscheidung getroffen wird, ob die Brennkraftmaschine (10) im Schichtbetrieb oder im stöchiometrischen Betrieb betrieben wird.

5. Verfahren nach Anspruch 1 oder 2, wobei die Unterbindung des Schichtbetriebs der Brennkraftmaschine (10) solange aufrechterhalten wird, bis der Vorrat an Kraftstofffluid von der Brennkraftmaschine (10) verbraucht ist.

**6.** Verfahren nach Anspruch 5, wobei eine erneute Erfassung des Gradienten der Abnahme der NOx-Speicherkapazität durchgeführt wird, wenn ein erneuter Vorrat an Kraftstofffluid vorhanden ist.

**Claims**

**1.** Method for regenerating an NOx storage catalyst (18),

- with the NOx storage catalyst (18) being arranged in an exhaust gas tract (12) in an internal combustion engine (10),
- with the internal combustion engine (10) being connected to a fuel fluid reservoir (11) in order to operate said internal combustion engine (10),
- with the NOx storage catalyst (18) being embodied with a storage capacity for storing NOx compounds emitted by the internal combustion engine (10), and
- with the NOx storage catalyst (18) absorbing NOx compounds during a storage phase, if the internal combustion engine (10) is operated in lean-burn mode,

**characterised in that**
a gradient of the drop in the NOx storage capacity is detected, with the lean-burn operation of the internal combustion engine (10) then being suppressed if the gradient exceeds a predetermined threshold value.

**2.** Method according to claim 1, with the internal combustion engine (10) being operated stoichiometrically when the lean-burn operation of the internal combustion engine (10) is suppressed.

**3.** Method according to claim 1 or 2, with the suppression of the lean-burn operation of the internal combustion engine (10) being maintained for the duration of a momentary operation of the internal combustion engine (10), until the internal combustion engine (10) is no longer in operation.

**4.** Method according to claim 3, with the gradients of the drop in the NOx storage capacity being detected again with a renewed operation of the internal combustion engine (10), with a decision being made on the basis of this renewed detection as to whether the internal combustion engine (10) is operated in lean-burn mode or stoichiometrically.

**5.** Method according to claim 1 or 2, with the suppression of the lean-burn operation of the internal combustion engine (10) being maintained until the reservoir of fuel fluid is consumed by the internal combustion engine (10).

**6.** Method according to claim 5, with the gradient of the drop in the NOx storage capacity being detected again if a new reservoir of fuel fluid is available.

**Revendications**

**1.** Procédé pour la régénération d'un catalyseur accumulateur de NOx (18),

- dans lequel le catalyseur accumulateur de NOx (18) est agencé dans une conduite de gaz d'échappement (12) d'un moteur à combustion interne (10),
- dans lequel le moteur à combustion interne (10) est en communication pour son fonctionnement avec une réserve de carburant fluide (11),
- dans lequel le catalyseur accumulateur de NOx (18) est réalisé avec une capacité d'accumulation pour l'accumulation de composés NOx émis par le moteur à combustion interne (10), et
- dans lequel le catalyseur accumulateur de NOx (18) adsorbe des composés NOx pendant une phase d'accumulation lorsqu'on fait fonctionner le moteur à combustion interne (10) dans un mode stratifié

**caractérisé en ce qu'**
un gradient de la décroissance de la capacité d'accumulation de NOx est détecté, et le mode stratifié du moteur à combustion interne (10) est interrompu lorsque le gradient devient supérieur à une valeur de seuil prédéterminée.

**2.** Procédé selon la revendication 1, dans lequel, lorsque le mode de fonctionnement stratifié du moteur à combustion interne (10) est interrompu, on fait fonctionner le moteur à combustion interne (10) dans un mode stoechiométrique.

**3.** Procédé selon la revendication 1 ou 2, dans lequel l'interruption du mode stratifié du moteur à combustion interne (10) est maintenue pendant la durée d'un fonctionnement momentané du moteur à combustion interne (10) allant jusqu'à ce que le moteur à combustion interne (10) ne soit plus en fonctionnement.

**4.** Procédé selon la revendication 3, dans lequel, lors de la remise en marche du moteur à combustion interne (10), on procède à une nouvelle détection du gradient de la décroissance de la capacité d'accumulation des NOx et, sur la base de cette nouvelle détection, une décision est prise pour faire fonctionner le moteur à combustion interne (10), soit dans le mode stratifié, soit dans le mode stoechiométrique.

**5.** Procédé selon la revendication 1 ou 2, dans lequel l'interruption du mode stratifié du moteur à combustion interne (10) reste maintenue jusqu'à ce que la réserve de carburant fluide ait été consommée par le moteur à combustion interne (10).

**6.** Procédé selon la revendication 5, dans lequel une nouvelle détection du gradient de la décroissance de la capacité d'accumulation des NOx est exécutée lorsqu'une nouvelle réserve de carburant fluide est présente.

**IN DER BESCHREIBUNG AUFGEFÜHRTE DOKUMENTE**

**In der Beschreibung aufgeführte Patentdokumente**

- DE 19844082 C1